# EUROPEAN PATENT APPLICATION

(11) **EP 2 725 385 A1**
(43) Date of publication of application: **30.04.2014**
(21) Application number: 12802335.5
(22) Date of filing: 23.04.2012
(51) Int. Cl.: G01S 17/36

(54) **DISTANCE MEASURING METHOD AND DEVICE**

(30) Priority: 23.06.2011 JP 2011139056
(71) Applicant: Hitachi, Ltd., Tokyo 100-8280 (JP)
(72) Inventor: HARIYAMA, Tatsuo, Tokyo 100-8280 (JP); KASAI, Hiroaki, Tokyo 100-8280 (JP); WATANABE, Masahiro, Tokyo 100-8280 (JP); YOSHIMURA, Kazushi, Tokyo 100-8280 (JP)
(74) Representative: Moore, Graeme Patrick
(86) International application number: PCT/JP2012/002767
(87) International publication number: WO 2012/176366

(57) **Abstract**

A distance measuring device optically beats down a light from a light source that oscillates a plurality of frequencies using an optical modulator, and detects a phase thereof at a low frequency to enhance a measurement precision without any increase in the device costs. The distance measuring device includes a light source that oscillates a light having a plurality of different frequencies, the optical modulator that modulates frequencies of the light from the light source and the light from the light source which has been applied to an object to be measured, and then reflected therefrom, an oscillator that inputs a voltage signal to the optical modulator, a detector that detects an optical signal modulated by the optical modulator, and a distance calculation circuit that calculates a distance according to the phase of the optical signal detected by the detector.

## Description

### BACKGROUND

The present invention relates to a distance measuring method and a distance measuring device for measuring a shape of middle or large-scale products (turbines, rail cars, escalators, vehicles, airplanes, and so on) with high precision.

A distance measuring device of Japanese Unexamined Patent Application Publication No. 2006-184181 uses a femtosecond mode-locked pulse laser device.

In a distance measuring device of Japanese Patent No. 3089376, a continuous light is subjected to frequency modulation by an optical modulator for modulation, applied to an object, demodulated by an optical modulator for demodulation, and detected.

### SUMMARY

The distance measuring device of Japanese Unexamined Patent Application Publication No. 2006-184181 needs to use about several mm as a measure of a shortest cycle in order to conduct distance measurement with a precision of several tens µm (a case where a phase measurement precision is about 2π/100), and needs to deal with about several tens GHz as a frequency. High frequency acceptable products of a several-tens GHz band are expensive, and the device costs are increased.

In the distance measuring device of Japanese Patent No. 3089376, it is difficult to enhance an intensity of a high-order frequency component generated by the optical modulator, and if the reflected light intensity of an object such as a coarse surface or an inclined surface is low, it is difficult to detect the signal of the high-order frequency component modulated and demodulated by the optical modulators. Also, a modulation oscillator and a demodulation oscillator are used with the results that an electric crosstalk is generated, and a cyclic error occurs in the measurement results.

The present invention has been made in view of the above problems, and aims at enhancing a measurement precision without any increase in the device costs by optically beating down a light emitted from a light source that oscillates a plurality of frequencies using an optical modulator, and detecting a phase at a low frequency.

In order to address the above problem, according to one aspect of the present invention, there is provided a distance measuring device including: a light source that oscillates a light having a plurality of different frequencies; an optical modulator that modulates the frequencies of the light from the light source, and a light from the light source which has been applied to an object to be measured and then reflected from the object to be measured; an oscillator that inputs an electric signal to the optical modulator; a detector that detects an optical signal modulated by the optical modulator; and a distance calculation circuit that calculates a distance according to a phase of an optical signal detected by the detector.

Also, according to another aspect of the present invention, there is provided a distance measuring method including: oscillating a light having a plurality of different frequencies from a light source; applying the light to an object to be measured; modulating the frequencies of the light from the light source, and the light reflected from the object to be measured; detecting the modulated light by a detector; and calculating a distance according to a phase of optical signals of the detected light reflected from the object to be measured, and the oscillated light.

According to the aspects of the present invention, the lights from the light source that oscillates the plurality of frequencies are optically beaten down using the optical modulator, and the phase detection is detected at a low frequency, thereby being capable of enhancing the measurement precision without any increase in the device costs.

### BRIEF DESCRIPTION OF THE DRAWINGS

FIG. 1A is a configuration diagram illustrating a device that beats down a light with an optical comb as a light source through an optical waveguide intensity modulator according to a first embodiment;
FIG. 1B is a graph illustrating spectrums of frequencies detected according to the first embodiment;
FIG. 2A is a configuration diagram illustrating a device that beats down a light with two LDs as a light source through an optical waveguide intensity modulator according to a second embodiment;
FIG. 2B is a graph illustrating spectrums of frequencies detected according to the second embodiment;
FIG. 3A is a diagram illustrating a structure of an electric field absorption intensity modulator according to a third embodiment;
FIG. 3B is a graph illustrating spectrums of frequencies that have passed through an electric field absorption intensity modulator according to the third embodiment;
FIG. 4A is a configuration diagram illustrating a device that beats down a light with an optical comb as a light source through an electric field absorption intensity modulator according to the third embodiment;
FIG. 4B is a graph illustrating spectrums of frequencies detected according to the third embodiment;
FIG. 5A is a configuration diagram illustrating a device that beats down a light with two LDs as a light source through an electric field absorption intensity modulator according to a fourth embodiment;
FIG. 5B is a graph illustrating spectrums of frequencies detected according to the fourth embodiment;
FIG. 6A is a configuration diagram illustrating a device that beats down a light with an optical comb as a light source through an optical waveguide intensity modulator, and extracts beat components different in frequency by plural kinds of bandpass filters according to a fifth embodiment;
FIG. 6B is a graph illustrating spectrums of frequencies detected according to the fifth embodiment;
FIG. 7A is a configuration diagram illustrating a device that beats down a light with a plurality of LDs different in frequency as a light source through an optical waveguide intensity modulator, and extracts beat components different in frequency by plural kinds of bandpass filters according to a sixth embodiment;
FIG. 7B is a graph illustrating spectrums of frequencies detected according to the sixth embodiment;
FIG. 8 is a configuration diagram illustrating a device that combines a time-of-flight technique with the fifth and sixth embodiments according to a seventh embodiment;
FIG. 9 is a configuration diagram illustrating a three-dimensional distance measuring device in which a distance measurement optical system mechanism described in the first to seventh embodiments is mounted according to an eighth embodiment;
FIG. 10A is a configuration diagram illustrating a device for keeping a constant difference frequency of two LDs according to a ninth embodiment;
FIG. 10B is a configuration diagram illustrating a device using an electric field absorption intensity modulator according to the ninth embodiment;
FIG. 10C is a graph illustrating spectrums of frequencies detected according to the ninth embodiment;
FIG. 11 is a diagram illustrating a principle of the optical comb;
FIG. 12A is an illustrative view illustrating an absolute distance measurement using multiple wavelengths;
FIG. 12B is a diagram illustrating a principle for measuring a long distance with high precision;
FIG. 13 is a configuration diagram illustrating a distance measuring device using the optical comb;
FIG. 14A is an illustrative view illustrating a Mach-Zehnder optical waveguide intensity modulator;
FIG. 14B is a graph illustrating optical spectrums after the light have passed through the optical modulator; and
FIG. 15 is a configuration diagram illustrating a distance measuring device using an optical modulator.

### DETAILED DESCRIPTION

Hereinafter, embodiments will be described with reference to the accompanying drawings.

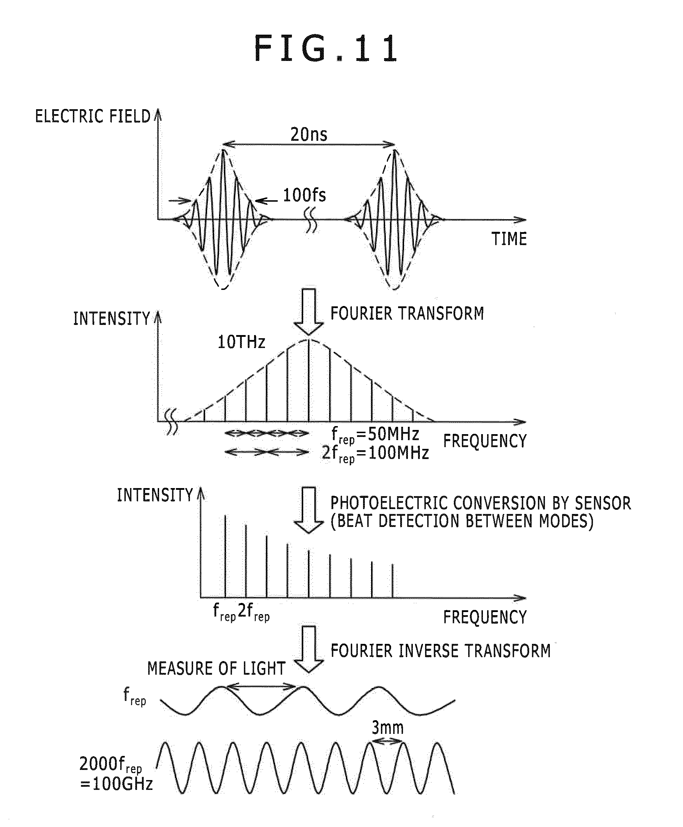

FIG. 11 illustrates a characteristic of a femtosecond mode-locked pulse laser device. The femtosecond mode-locked pulse laser device is an ultrashort pulse train in which pulse intervals are very stable in a time domain. If the ultrashort pulse train is subjected to Fourier transform, a large number of stable optical frequency mode trains are aligned at regular frequency intervals. Because the optical frequency mode trains have a discrete spectrum structure like a comb teeth, the optical frequency mode trains are called an optical (frequency) comb. Also, the frequency interval between the teeth of the comb is called "repetitive frequency (frep)". The "frep" is an inverse of the pulse interval of the ultrashort pulse train. When the optical frequency comb is detected by a detector, frequencies (frep, 2frep, 3frep, ...) of integral multiples of "frep" are detected. When the frequencies are subjected to photoelectric conversion (inverse Fourier transform), beat signals between the modes are detected. The beat signals are used as a measure of the distance measurement.

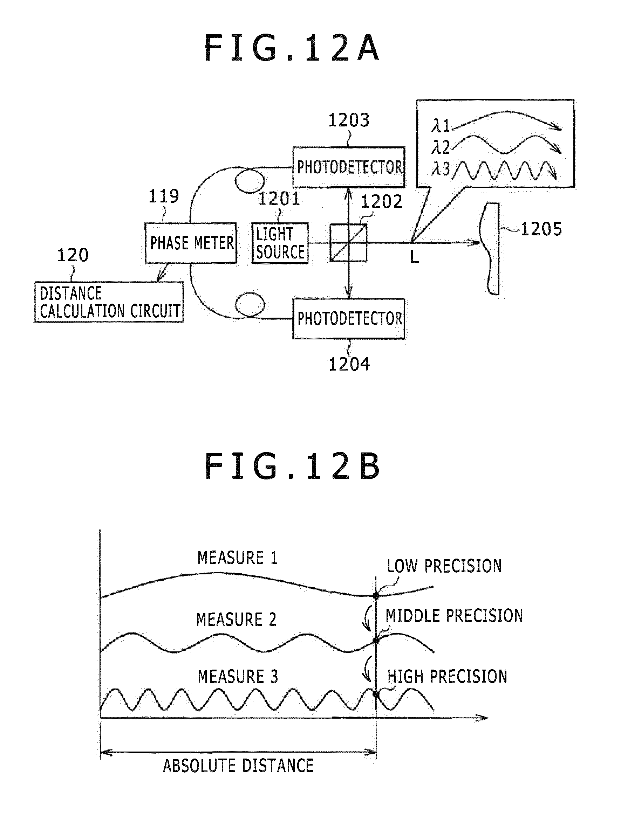

FIG. 12A illustrates a high-precision distance measuring device using the optical comb. The optical comb is used as a light source 1201. A part of the beam is split by a beam splitter 1202, detected by a photodetector 1203, and used as a reference signal. A main portion of the beam is applied to an object to be measured 1205, and a reflected light is again returned to a main body, optically detected by a photodetector 1204 as a probe signal. A frequency component used for distance measurement is selected from a large number of frequency components included in the probe signal by a bandpass filter, and a phase difference from the reference signal is measured by a phase meter 119 to obtain distance information 120.

FIG. 12B illustrates a principle for measuring a long distance with high precision. First, the distance measurement is conducted with low precision using a measure 1 having a long cycle in which a measurement range falls within one cycle. Then, a distance measurement precision is enhanced using a measure 2 having a cycle within which the precision obtained in the measure 1 falls. Finally, the distance measurement is conducted with a high precision using a measure 3 having a cycle in which a target precision is obtained.

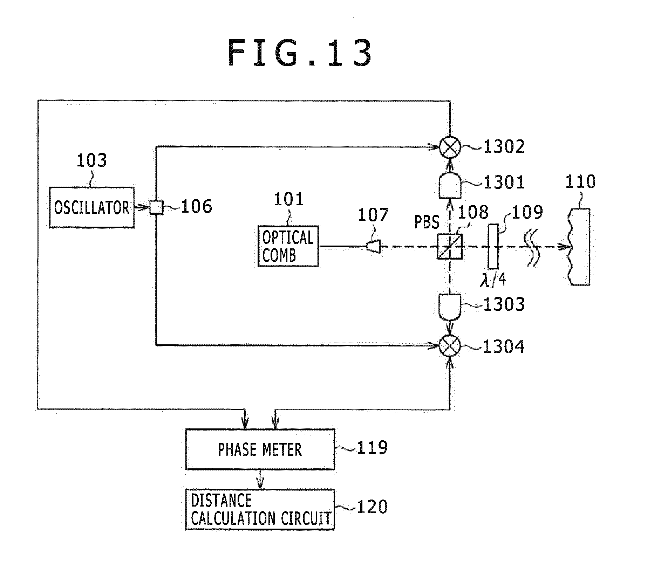

FIG. 13 is a configuration diagram illustrating a distance measuring device using the optical comb. In this configuration, in order to detect a beat signal of 40 GHz, a detector 1301, a mixer 1302, an oscillator 103, and a power divider 106 for 40 GHz are required. In this case, 40 GHz (measure length 3.75 mm) is assumed as a frequency to be dealt with. In the distance measuring device illustrated in FIG. 13, in order to conduct the distance measurement with a precision of several tens µm, about several mm needs to be used as the measure of a shortest cycle (a case of about 2π/100 in phase measurement precision), and about several tens GHz needs to be dealt with as the frequency. The high frequency compliant product of a several tens GHz band is expensive, resulting in a problem that the device costs are high.

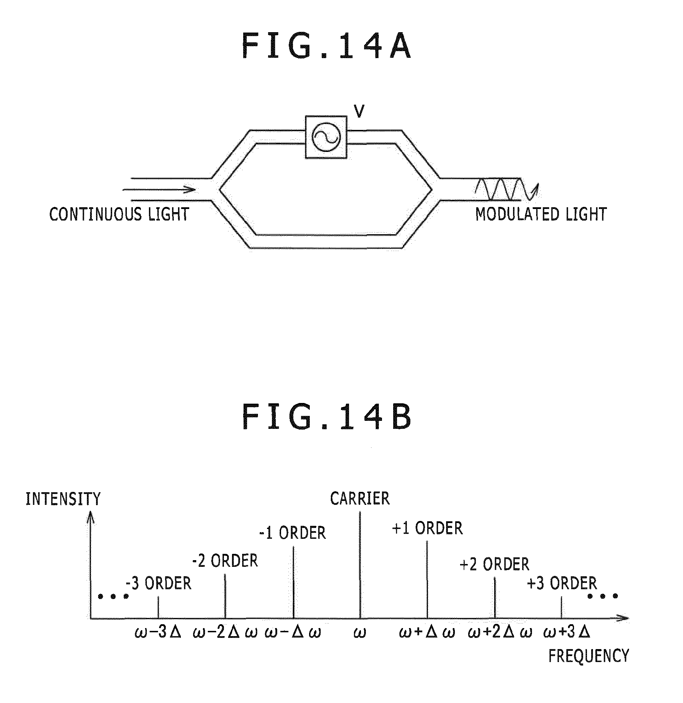

FIGS. 14A and 14B illustrate a Mach-Zehnder optical waveguide intensity modulator which is an example of the optical modulator. As illustrated in FIG. 14A, a light input from an input port is split into two lights, and the light input to one waveguide passes through the waveguide as it is, and a the light input to the other waveguide is subjected to phase modulation by applying a voltage to the element to change a refractive index in an optical path. When the lights that have passed through both of the waveguides are coupled together, the light may be high or low in intensity according to the phase difference. Therefore, a light intensity can be modulated. FIG. 14B illustrates optical spectrums after the light have passed through the optical modulator. When it is assumed that a modulation frequency of the voltage to be applied to the optical modulator is dω, sidebands are generated for the frequency of the continuous light such that a ±1^{st} order component of the ω±dω, a ±2^{nd} order component of the ω±2dω, and a ±3^{rd} order component of the ω±3dω are generated for a frequency ω of the input continuous light. The sideband intensity of the respective orders can be adjusted by changing the bias voltage to be applied to the optical modulator.

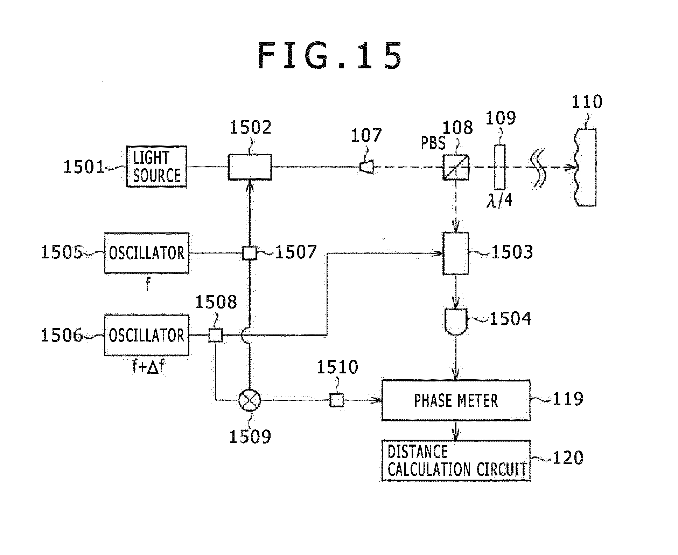

FIG. 15 is a configuration diagram illustrating a high-precision distance measuring device using an optical modulator. A continuous light is applied from a light source 1501, and input to an optical modulator 1502 for modulation. The optical modulator 1502 is subjected to voltage modulation of a frequency f from an oscillator 1505 whereby a frequency modulation nf which is n-times as high as the frequency f can be subjected to the input light. The light that has passed through the optical modulator 1502 is propagated in space by a fiber collimator 107, passes through a polarization beam splitter 108 and a λ/4 plate 109, and is applied to an object 110. The reflected light again passes through the λ/4 plate 109 and the polarization beam splitter 108, and is then input to an optical modulator 1503 for demodulation. When it is assumed that the modulation frequency of the voltage to be applied to the optical modulator for demodulation from an oscillator 1506 is f+df, the light can be subjected to a frequency modulation nf+ndf of n-times, and a modulation frequency component of ndf which is a difference frequency between the above modulation frequency and a modulation frequency subjected by the optical modulator for modulation is output. Hence, if a sufficiently small value (several MHz to several kHz) is selected as df, the high-precision distance measurement can be conducted by a detector 1504 low in frequency response. Also, since the modulation signal which is n-times as high as the modulation frequency of the voltage to be applied is used, the distance measurement can be conducted with an n-times precision of the frequency of the oscillator.

On the other hand, in the distance measuring device illustrated in FIG. 15, the continuous light from the light source 1501 passes through the optical modulators (1502, 1503) twice, and particularly higher-order frequency components are liable to be attenuated. Therefore, it is difficult to increase the intensity of the high-order frequency component, and when the reflected light intensity of the object such as a coarse surface or an inclined surface is low, it is difficult to detect the signal of the high-order frequency component modulated or demodulated by the optical modulators. Also, the oscillator for modulation and the oscillator for demodulation are used, and there arise such problems that an electric crosstalk is generated, and a cyclic error is generated in the measurement result.

### First Embodiment

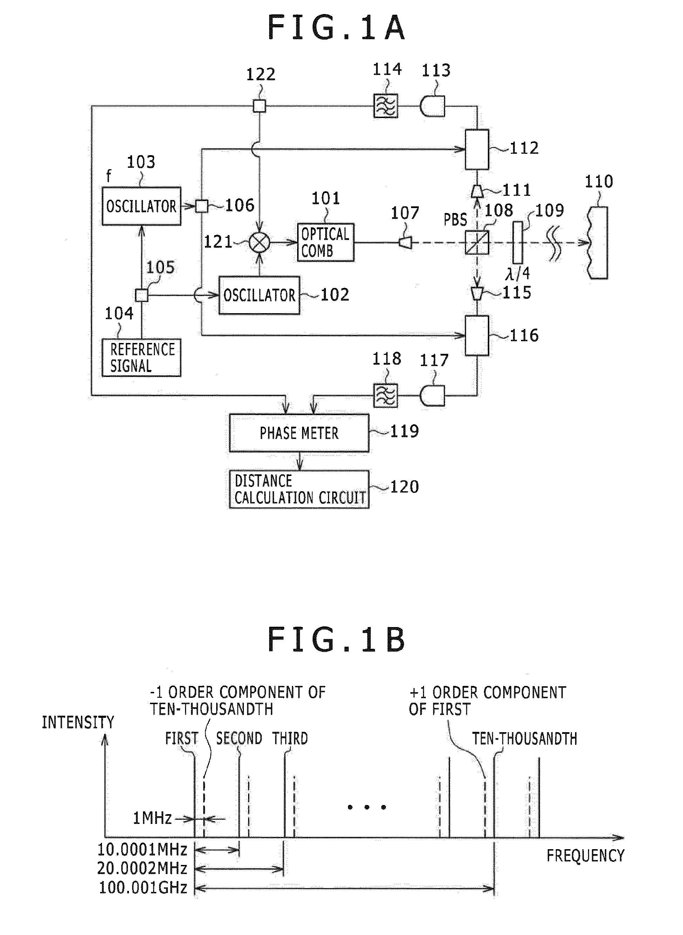

In view of the above problems with the distance measuring device illustrated in FIG. 15, a method of measuring a distance with a high precision using the optical comb, and the optical waveguide intensity modulator in a developed first embodiment will be described with reference to FIGS. 1A and 1B.

FIG. 1A exemplifies a configuration diagram of a distance measuring device according to this embodiment. In this embodiment, an optical comb that oscillates a discrete light having a plurality of optical frequencies described in FIG. 11 is used as a light source. The optical comb emitted from an optical comb generator 101 is applied in space by the fiber collimator 107, and input to the polarization beam splitter 108. A part of the light is condensed by a fiber collimator 111, and input to an optical waveguide intensity modulator 112, and a main portion of the light passes through the λ/4 plate 109, and is applied to the object 110. A reflected light from the object again passes through the λ/4 plate 109, is reflected by the polarization beam splitter 108, condensed by a fiber collimator 115, and input to an optical waveguide intensity modulator 116. The oscillator 103 generates an electric signal of a frequency f, and splits the electric signal into two signals by the power divider 106, and input to the respective optical waveguide intensity modulators 112 and 116. The frequencies modulated by the optical waveguide intensity modulators 112 and 116 are determined according to the frequency of the electric signal generated by the oscillator 103. The light that has passed through the optical waveguide intensity modulator 112 is converted into an electric signal by a photodetector 113, and only a frequency component used for distance measurement is extracted by a filter 114, and input to the phase meter 119 as a reference signal. Likewise, the light that has passed through the optical waveguide intensity modulator 116 is converted into an electric signal by a photodetector 117, and only a frequency component used for distance measurement is extracted by a filter 118, and input to the phase meter 119 as a measurement signal. The phase is calculated by the phase meter 119, and the distance is calculated by the distance calculation circuit 120.

FIG. 1B illustrates a principle for optically beating down the optical comb using the optical waveguide intensity modulator. For example, if a repetitive frequency (frep) of the optical comb is set to 10.0001 MHz, spectrums are present at 10.0001 MHz intervals on a frequency basis. A frequency interval of the spectrum distant from a certain spectrum by 10,000 spectrums is 100.001 GHz. Let us consider a case in which this beat signal is used for distance measurement. For example, let us consider a case in which the optical waveguide intensity modulators 112 and 116 are subjected to frequency modulation from the oscillator 103 driven by a reference signal generator 104, and the light is optically beaten down using a first-order sideband component. If 100 GHz is set as the oscillating frequency of the oscillator 103, the frequency interval of the spectrum distant from a certain spectrum by 10,000 spectrums is beaten down from 100.001 GHz to 1 MHz, so that the light can be detected by the photodetector 113. Also, considering a case in which the light is optically beaten down using a second-order component, 50 GHz is set as the oscillating frequency of the oscillator 103, and the frequency interval of the spectrum distant from the certain spectrum by 10,000 spectrums is likewise beaten down from 100.001 GHz to 1 MHz, so that the light can be detected. Similarly, considering a case in which the light is optically beaten down using an n^{th}-order component, 100/n GHz is set as the oscillating frequency of the oscillator, and the frequency interval of the spectrum distant from the certain spectrum by 10,000 spectrums is likewise beaten down from 100.001 GHz to 1 MHz, so that the light can be detected. That is, the optical waveguide intensity modulators 112 and 116 can conduct the optical modulation (optical beat-down) of the frequency which is n-times as high as the frequency input from the oscillator 103. Also, if the light can be beaten down using the higher-order sideband component, the oscillating frequency of the oscillator can be reduced to a low frequency. Further, the light emitted from the optical comb 101 passes through the optical waveguide intensity modulator 112 or the optical waveguide intensity modulator 116 only once. As a result, an attenuation of the higher-order frequency component can be minimized, and the higher-order frequency component can be detected with a high precision.

Because a frequency fluctuation is contained in the oscillating frequency of the optical comb 101, and the oscillating frequency of the oscillator 103, there is a possibility that the frequency of the signal optically beaten down fluctuates, and the phase measurement precision is adversely affected. In this embodiment, an oscillator 102 is disposed for the purpose of holding the frequency of the optical beat down signal constantly. A phase comparison between the optically beaten-down signal and the oscillator 102 is conducted (for example, the phase comparison can be performed by a mixer 121), and an error signal is input to a repetitive frequency control mechanism of the optical comb 101, and the repetitive frequency of the optical comb is controlled so that the frequency of the optical beat down signal is held constant. In this situation, the signal from the reference signal generator 104 is split into two signals by a power divider 105, and the respective signals are set to external reference signals of the oscillators 103 and 102, thereby needing to synchronize the phases of those two oscillators with each other. With the above configuration, the fluctuation of the frequency of the optically beaten-down signal can be prevented, and the degradation of the phase measurement precision can be suppressed.

According to this embodiment, the optical comb 101 is used as the light source, the high-frequency beat component of the optical comb 101 is optically beaten down using the optical waveguide intensity modulators 112 and 116, and the phase is detected at a low frequency, thereby being capable of enhancing the measurement precision without any increase in the device costs.

### Second Embodiment

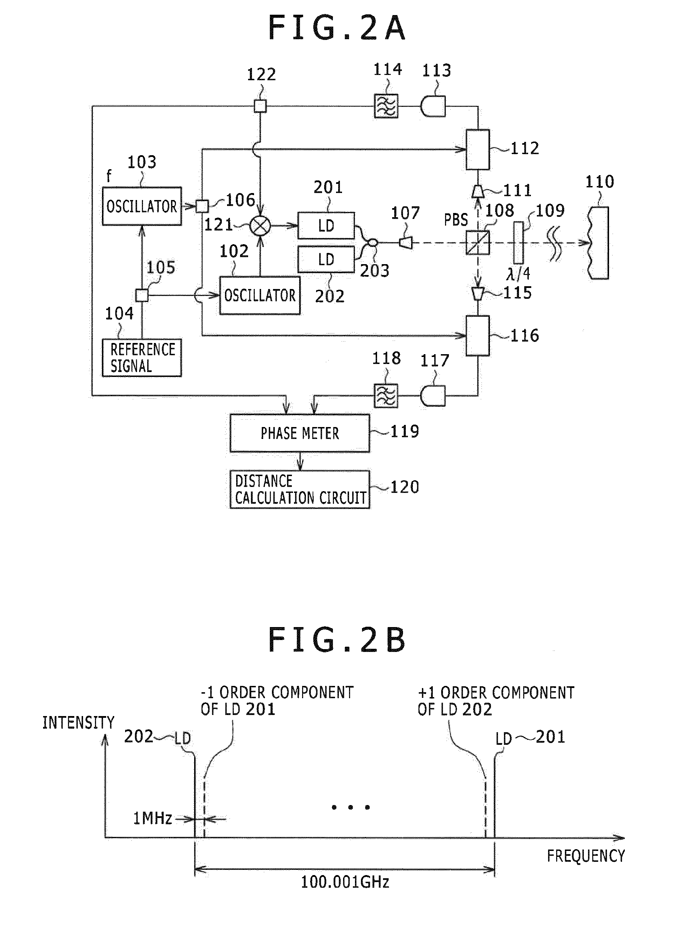

A second embodiment of the present invention will be described with reference to FIGS. 2A and 2B.

In this embodiment, an example of a device using not the optical comb, but two LDs as the light source will be described. FIG. 2A exemplifies a configuration diagram illustrating a device using the two LDs according to the second embodiment. In the device of FIG. 2A, parts having the same functions as those of the configuration indicated by identical symbols illustrated in FIG. 1 as already described will be omitted from description.

An LD 201 and an LD 202 slightly different in the oscillating frequency from each other are used as the light source. The lights of the LD 201 and the LD 202 are guided to the same optical path by a coupler 203, applied in space by the fiber collimator 107, and input to the polarization beam splitter 108. A part of the light is condensed by the fiber collimator 111, and input to the optical waveguide intensity modulator 112, and a main portion of the light passes through the λ/4 plate 109, and is applied to the object 110. A reflected light from the object again passes through the λ/4 plate 109, is reflected by the polarization beam splitter 108, condensed by a fiber collimator 115, and input to an optical waveguide intensity modulator 116.

FIG. 2B illustrates a principle for optically beating down a beat component between the two LDs using the optical waveguide intensity modulator. For example, a frequency difference between the LDs is set to 100.001 GHz. Let us consider a case in which this beat signal is used for distance measurement. For example, let us consider a case in which the optical waveguide intensity modulators are subjected to frequency modulation from the oscillator 103, and the light is optically beaten down using the first-order sideband component. As in the first embodiment, considering a case in which the light is optically beaten down using the n^{th}-oxder component, 100/n GHz is set as the oscillating frequency of the oscillator 103, and beaten down to 1 MHz, so that the light can be detected. If the light can be beaten down using the higher-order sideband component, the oscillating frequency of the oscillator can be reduced to a low frequency.

Because a frequency fluctuation is contained in the beat frequency between the two LDs, and the oscillating frequency of the oscillator 103, there is a possibility that the frequency of the signal optically beaten down fluctuates, and the phase measurement precision is adversely affected. The oscillator 102 is disposed for the purpose of holding the frequency of the optical beat down signal constantly. A phase comparison between the optically beaten-down signal and the oscillator 102 is conducted (for example, the phase comparison can be performed by a mixer 121), and an error signal is input to an oscillating frequency control mechanism of the LD 201, whereby the oscillating frequency of the LD 201 is controlled so that the frequency of the optical beat down signal is held constant. In this situation, the signal from the reference signal generator 104 is split into two signals by the power divider 105, and the respective signals are set to external reference signals of the oscillators 103 and 102, thereby needing to synchronize the phases of those two oscillators with each other. With the above configuration, the fluctuation of the frequency of the optically beaten-down signal can be prevented, and the degradation of the phase measurement precision can be suppressed.

According to this embodiment, the plurality of LDs is used as the light source, the high-frequency beat component between the plurality of LDs is optically beaten down using the optical waveguide intensity modulators, and the phase is detected at a low frequency, thereby being capable of enhancing the measurement precision without any increase in the device costs.

Also, when the optical comb is used as the light source, a large number of beat signals not used for the distance measurement is also generated. On the other hand, in the case of the LDs, because only the beat signal used for the distance measurement is generated, the beat signal is easily extracted by the filter.

### Third Embodiment

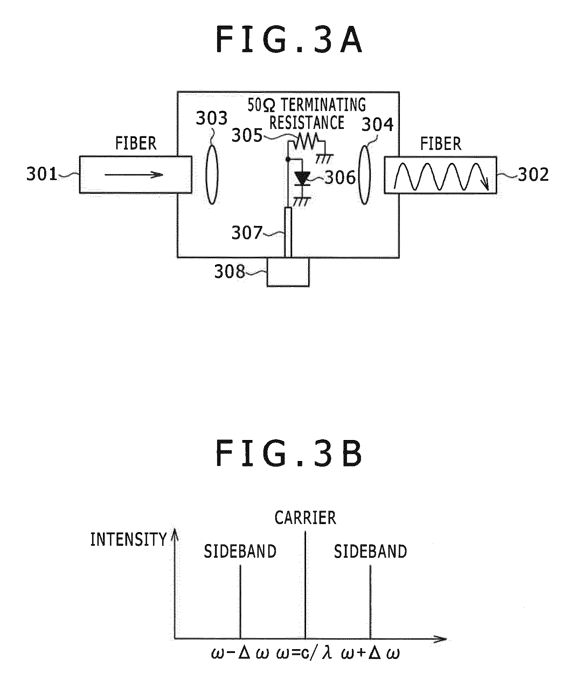

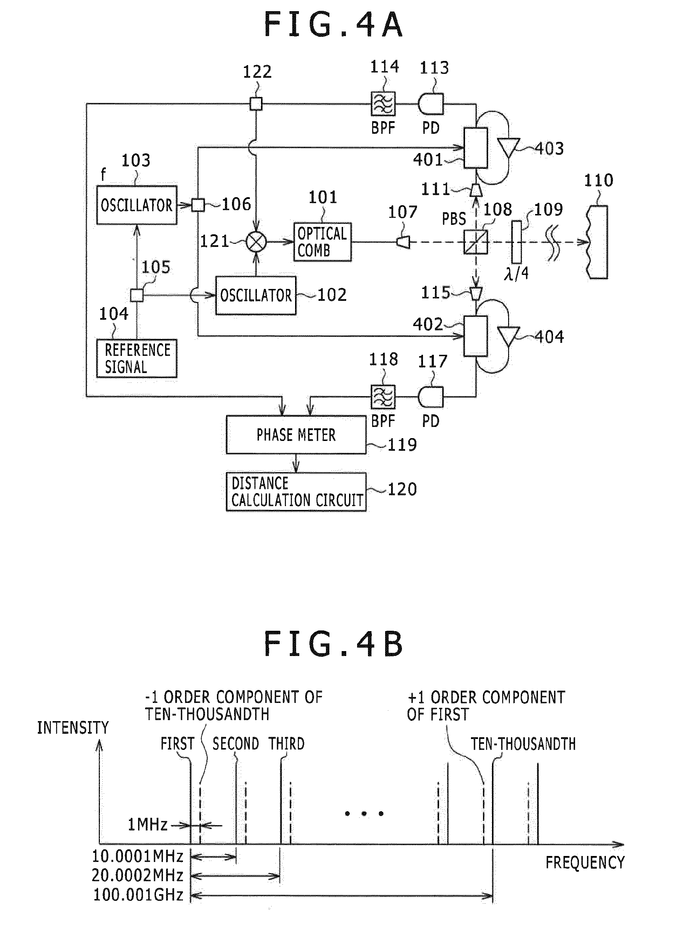

A third embodiment according to the present invention will be described with reference to FIGS. 3A, 3B, 4A, and 4B.

In this embodiment, an example of a device using not the optical waveguide intensity modulators but an electric field absorption intensity modulator will be described. FIG. 3A illustrates a principle of the electric field absorption intensity modulator. As illustrated in FIG. 3A, a continuous light 201 is input, and applied to a semiconductor element 306. The semiconductor element can change an absorption rate for the input wavelength by an electric field to be applied. Hence, a modulated light 302 can be obtained by modulating the electric field to be applied. FIG. 3B illustrates optical spectrums of frequencies that have passed through an electric field absorption intensity modulator. When it is assumed that the modulation frequency of the voltage to be applied to the optical modulator is dω, sidebands are generated for the frequency ω of the input continuous light. In the optical waveguide intensity modulator illustrated in FIG. 13, because the phase modulation is effected, the spectrum components such as a ±1^{st} order, a ±2^{nd} order component, and a ±3^{rd} order component of the modulation frequency are present. On the other hand, in the electric field absorption intensity modulator, only the ±1^{st} order spectrum component is present because of the intensity modulation caused by the absorption.

FIG. 4A illustrates a device configuration using the electric field absorption intensity modulator. In the device of FIG. 4A, parts having the same functions as those of the configuration indicated by identical symbols illustrated in FIG. 1 as already described will be omitted from description. Electric field absorption intensity modulators 401 and 402 are used for the purpose of conducting the optical beat down. Also, fiber loops for again inputting the lights emitted from the electric field absorption intensity modulators to the electric field absorption intensity modulators 401 and 402 are provided for the purpose of conducting the optical beat down at a frequency which is n-times as high as the frequency f applied from the oscillator 103. Optical amplifiers 403 and 404 are introduced in the respective fiber loops in order to suppress the attenuation of the light.

The optical comb emitted from the optical comb generator 101 is applied in space by the fiber collimator 107, and input to the polarization beam splitter 108. A part of the light is condensed by the fiber collimator 111, and input to the electric field absorption intensity modulator 401, and a main portion of the light passes through the λ/4 plate 109, and is applied to the object 110. A reflected light from the object again passes through the λ/4 plate 109, is reflected by the polarization beam splitter 108, condensed by a fiber collimator 115, and input to the electric field absorption intensity modulator 402.

FIG. 4B illustrates a principle for optically beating down the beat comb using the electric field absorption intensity modulator. For example, if a repetitive frequency of the optical comb is set to 10.0001 MHz, spectrums are present at 10.0001 MHz intervals on a frequency basis. A frequency interval of the spectrum distant from a certain spectrum by 10,000 spectrums is 100.001 GHz. Let us consider a case in which this beat signal is used for distance measurement. For example, let us consider a case in which the light is optically beaten down using a frequency component that has passed through the electric field absorption intensity modulators 401 and 402 once. 100 GHz is set as the oscillating frequency of the oscillator 103, and the oscillating frequency is beaten down to 1 MHz so that the light can be detected by the photodetector 113. Also, considering a case in which the light is optically beaten down using the component that has passed through the electric field absorption intensity modulators twice, 50 GHz is set as the oscillating frequency of the oscillator 103, and the oscillating frequency is beaten down to 1 MHz so that the light can be detected. Likewise, considering a case in which the light is optically beaten down using the component that has passed through the electric field absorption intensity modulators n-times, 100/n GHz is set as the oscillating frequency of the oscillator 103, and the oscillating frequency is beaten down to 1 MHz so that the light can be detected. If the light can be optically beaten down using the frequency component that has passed through the electric field absorption intensity modulators n-times, the oscillating frequency of the oscillator can be reduced to a low frequency.

In this embodiment, as in the first embodiment, a phase comparison between the optically beaten-down signal and the oscillator 102 is conducted (for example, the phase comparison can be performed by the mixer 121), and an error signal is input to a repetitive frequency control mechanism of the optical comb 101, whereby the repetitive frequency of the optical comb is controlled so that the frequency of the optical beat down signal is held constant. With the above configuration, the fluctuation of the frequency of the optically beaten-down signal can be prevented, and the degradation of the phase measurement precision can be suppressed.

According to this embodiment, the optical comb is used as the light source, the high-frequency beat component of the optical comb is optically beaten down using the electric field absorption intensity modulators, and the phase is detected at a low frequency, thereby being capable of enhancing the measurement precision without any increase in the device costs. Also, with the provision of the electric field absorption intensity modulators within the fiber loops, as in the case where the optical waveguide intensity modulators are used, the optical beat down by the higher-order component of the modulation frequency can be conducted.

### Fourth Embodiment

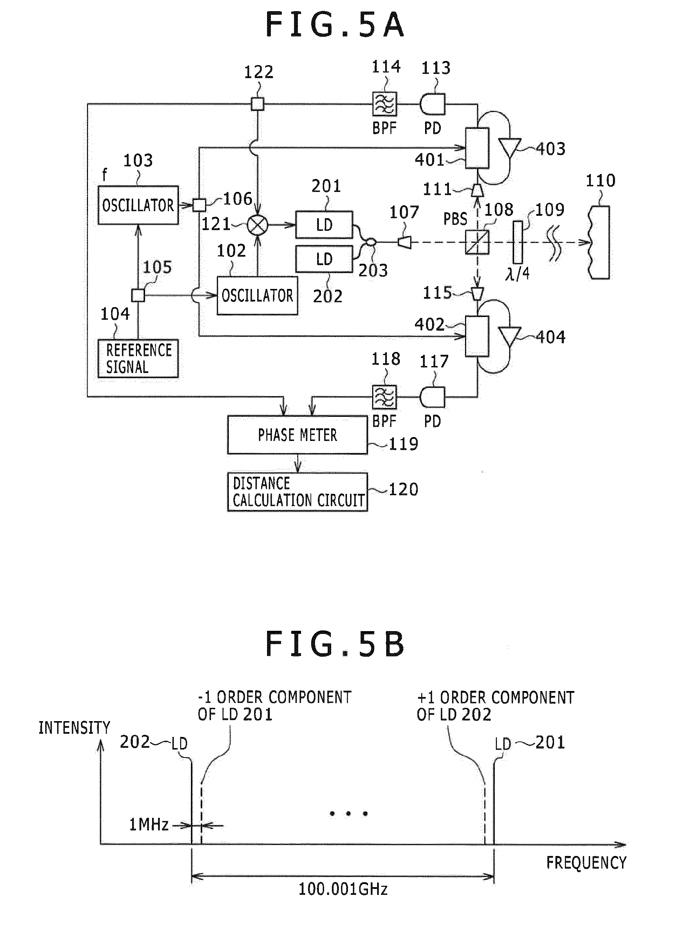

A fourth embodiment according to the present invention will be described with reference to FIGS. 5A and 5B.

In this embodiment, an example of a device using the electric field absorption intensity modulators as the optical modulators, and the two LDs as the light source will be described. FIG. 5A exemplifies a device configuration diagram according to the fourth embodiment. In the device of FIG. 5A, parts having the same functions as those of the configuration indicated by identical symbols illustrated in FIG. 1 as already described will be omitted from description.

The LD 201 and the LD 202 slightly different in the oscillating frequency from each other are used as the light source. The lights of the LD 201 and the LD 202 are guided to the same optical path by the coupler 203, applied in space by the fiber collimator 107, and input to the polarization beam splitter 108. A part of the light is condensed by the fiber collimator 111, and input to the electric field absorption intensity modulator 401, and a main portion of the light passes through the λ/4 plate 109, and is applied to the object 110. A reflected light from the object again passes through the λ/4 plate 109, is reflected by the polarization beam splitter 108, condensed by a fiber collimator 115, and input to the electric field absorption intensity modulator 402.

FIG. 5B illustrates a principle for optically beating down the beat component between the two LDs using the electric field absorption intensity modulators. For example, a frequency difference between the LDs is set to 100.001 GHz. Let us consider a case in which this beat signal is used for distance measurement. As in the third embodiment, considering a case in which the light is optically beaten down using the component that has passed through the electric field absorption intensity modulators n-times, 100/n GHz is set as the oscillating frequency of the oscillator, and beaten down to 1 MHz, so that the light can be detected. If the light can be beaten down using the frequency component that has passed through the electric field absorption intensity modulators plural times, the oscillating frequency of the oscillator can be reduced to a low frequency.

In this embodiment, as in the second embodiment, a phase comparison between the optically beaten-down signal and the oscillator 102 is conducted (for example, the phase comparison can be performed by the mixer 121), and an error signal is input to the repetitive frequency control mechanism of the optical comb 101, whereby the difference frequency between the LD 201 and the LD 202 is controlled so that the frequency of the optical beat down signal is held constant. With the above configuration, the fluctuation of the frequency of the optically beaten-down signal can be prevented, and the degradation of the phase measurement precision can be suppressed.

According to this embodiment, the plurality of LDs is used as the light source, the high-frequency beat component between the plurality of LDs is optically beaten down using the electric field absorption intensity modulators, and the phase is detected at a low frequency, thereby being capable of enhancing the measurement precision without any increase in the device costs.

Also, when the optical comb is used as the light source, a large number of beat signals not used for the distance measurement is also generated. Contrarily, in the case of the LDs, because only the beat signal used for the distance measurement is generated, the beat signal is easily extracted by the filter. Also, with the provision of the electric field absorption intensity modulators within the fiber loops, as in the case where the optical waveguide intensity modulators are used, the optical beat down by the higher-order component of the modulation frequency can be conducted.

### Fifth Embodiment

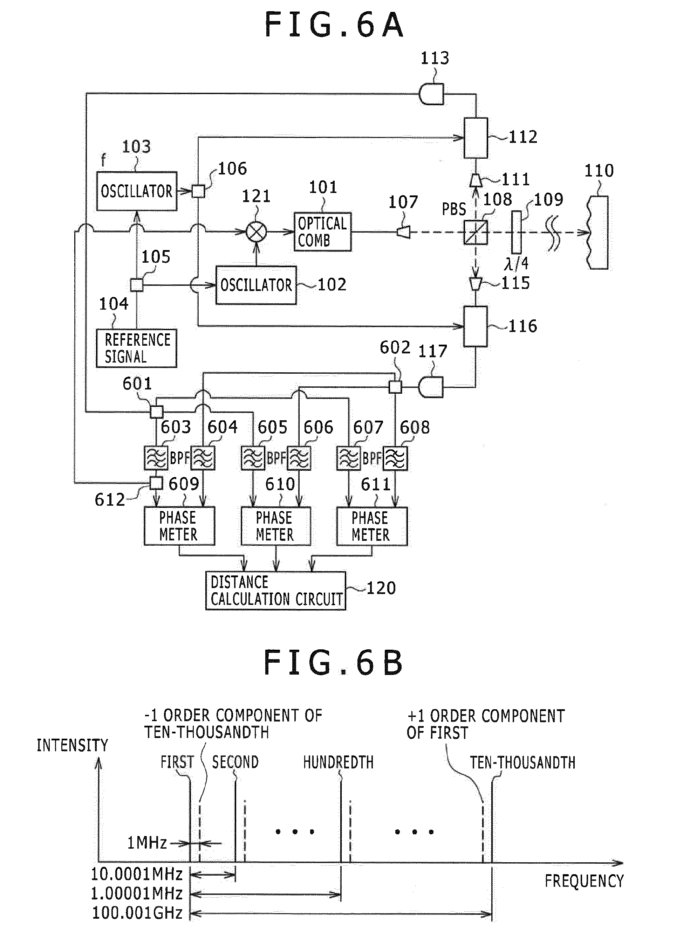

A fifth embodiment according to the present invention will be described with reference to FIGS. 6A and 6B.

In this embodiment, an example of a device that measures the phases of the plural frequencies, and measures a long distance with a high precision will be described. FIG. 6A exemplifies a configuration diagram of a distance measuring device according to this embodiment. In the device of FIG. 6A, parts having the same functions as those of the configuration indicated by identical symbols illustrated in FIG. 1 as already described will be omitted from description. A beat component that is an integral multiple of the repetitive frequency of the optical comb, and a beat component that is optically beaten down by the optical waveguide intensity modulator are contained in the beat component detected by the photodetector 113. For example, as illustrated in FIG. 6B, if the repetitive frequency of the optical comb is set to 10.0001 MHz, and the frequency optically beaten down by the optical waveguide intensity modulator is set to 100 GHz, the beats are present at 10.0001 MHz intervals. Also, a beat component of 1 MHz to which the spectrum (100.001 GHz) distant by 10,000 spectrums is optically beaten down is also present. A signal containing those beat components are split into three signals by a power divider 601, and frequency components to be measured are extracted by respective bandpass filters 603, 605, and 607. For example, it is assumed that a passing center frequency of the bandpass filter 603 is set to 1 MHz, a passing center frequency of the bandpass filter 605 is set to 10 MHz, and a passing center frequency of the bandpass filter 607 is set to 1 GHz. Likewise, a signal of a photodetector 117 are split into three signals by a power divider 602, and frequency components to be measured are extracted by respective bandpass filters 604, 606, and 608. The passing center frequencies of the bandpass filters 604, 606, and 608 are set to 1 MHz, 10 MHz, and 1 GHz. A phase measurement of 1 MHz is conducted by a phase meter 609, a phase measurement of 10 MHz is conducted by a phase meter 610, and a phase measurement of 1 GHz is conducted by a phase meter 611. The distance measurement is conducted by the distance calculation circuit 120 on the basis of three phase information. If the respective phase measurement precisions are set to 2π/150, or lower, a beat component of the frequency 10 MHz is 15 m in a distance measurement cycle, and 100 mm (1/150 of 15 m) in a phase measurement precision. Also, a beat component of the frequency 1 GHz is 150 mm in the distance measurement cycle, and 1 mm (1/150 of 150 mm) in the phase measurement precision. Also, a beat component (component obtained by optically beating down 100.001 GHz) of the frequency 1 MHz is 1.5 mm in the distance measurement cycle, and 10 µm (1/150 of 1.5 mm) in the phase measurement precision. Hence, a distance of 15 m can be measured with a precision of 10 µm.

In this embodiment, as in the first embodiment, a phase comparison between the optically beaten-down signal and the oscillator 102 is conducted (for example, the phase comparison can be performed by the mixer 121), and an error signal is input to the repetitive frequency control mechanism of the optical comb 101, whereby the repetitive frequency of the optical comb is controlled so that the frequency of the optical beat down signal is held constant. With the above configuration, the fluctuation of the frequency of the optically beaten-down signal can be prevented, and the degradation of the phase measurement precision can be suppressed.

According to this embodiment, the optical comb is used as the light source, the high-frequency beat component of the optical comb is optically beaten down using the optical waveguide intensity modulators, and the phase is detected at a low frequency, thereby being capable of enhancing the measurement precision without any increase in the device costs. Also, a long distance can be measured using a plurality of frequency components with a high precision.

### Sixth Embodiment

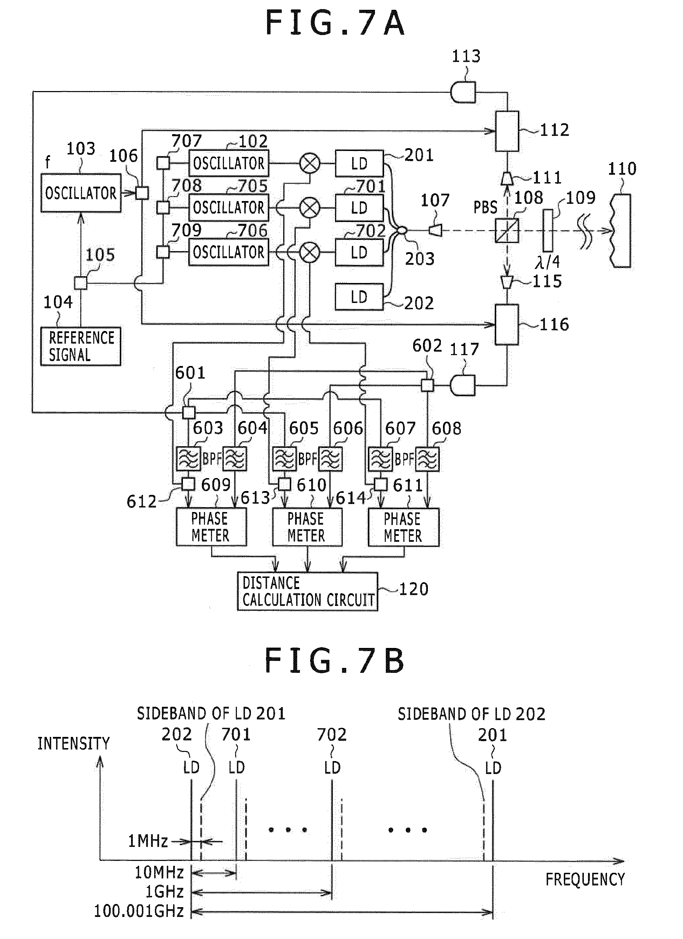

A sixth embodiment according to the present invention will be described with reference to FIGS. 7A and 7B.

In this embodiment, an example of a device that measures the phases of the plural frequencies, and measures a long distance with a high precision using a plurality of LDs as the light source will be described. In the device of FIG. 7A, parts having the same functions as those of the configuration indicated by identical symbols illustrated in FIGS. 2A, 2B, and 6A, 6B as already described will be omitted from description. In FIG. 2, two LDs are used for the distance measurement of the beat having the difference frequency. On the other hand, in this embodiment, a plurality of LDs is used to enable a plurality of beats to be generated. For example, a case in which three kinds of beats is generated using four LDs will be described. As illustrated in FIG. 7B, an LD 701, an LD 702, and the LD 201 are set so that the respective difference frequencies become 10 MHz, 1 GHz, and 100.001 GHz for the LD 202 as a reference. The beat frequency of the LD 201 is optically beaten down to 1 MHz by the optical waveguide intensity modulator. The beat frequencies detected by the photodetector 113 and the photodetector 117 become 1 MHz, 10 MHz, and 1 GHz. As described in the fifth embodiment, a distance of 15 m can be measured for those beat signals with a precision of 10 µm, using the power divider, the bandpass filters, phase meters, and the distance calculation circuit.

The oscillator 102 is provided for the purpose of holding the frequency of the signal obtained by optically beating down the difference frequency of the LD 201 and the LD 202 constant. The optically beaten-down signal is extracted by a power divider 612, and a phase comparison with the oscillator 102 is conducted (for example, the phase comparison can be performed by the mixer 121), and an error signal is input to the oscillating frequency control mechanism of the LDs, whereby the oscillating frequency of the LDs is controlled so that the frequency of the optical beat down signal is held constant. Likewise, an oscillator 705 is provided for the purpose of holding the difference frequency between the LD 201 and the LD 202 constant. A phase comparison between the signal extracted by a power divider 613 and the oscillator 705 is conducted, and an error signal is input to the oscillating frequency control mechanism of the LD 701, whereby the difference frequency between the LD 202 and the LD 701 is held constant. Likewise, an oscillator 706 is provided for the purpose of holding the difference frequency between the LD 202 and the LD 702 constant. A phase comparison between the signal extracted by a power divider 614 and the oscillator 706 is conducted, and an error signal is input to the oscillating frequency control mechanism of the LD 701, whereby the difference frequency between the LD 202 and the LD 702 is held constant. With the above configuration, the fluctuation of the frequency of the optically beaten-down signal can be prevented, and the degradation of the phase measurement precision can be suppressed.

According to this embodiment, the plurality of LDs is used as the light source, the high-frequency beat component between the plurality of LDs is optically beaten down using the electric field absorption intensity modulators, and the phase is detected at a low frequency, thereby being capable of enhancing the measurement precision without any increase in the device costs.

Because the beat signal not used for the distance measurement is not generated unlike the optical comb, the extraction by the filters is facilitated. Also, using the plurality of frequency components, the long distance can be measured with a high precision.

### Seventh Embodiment

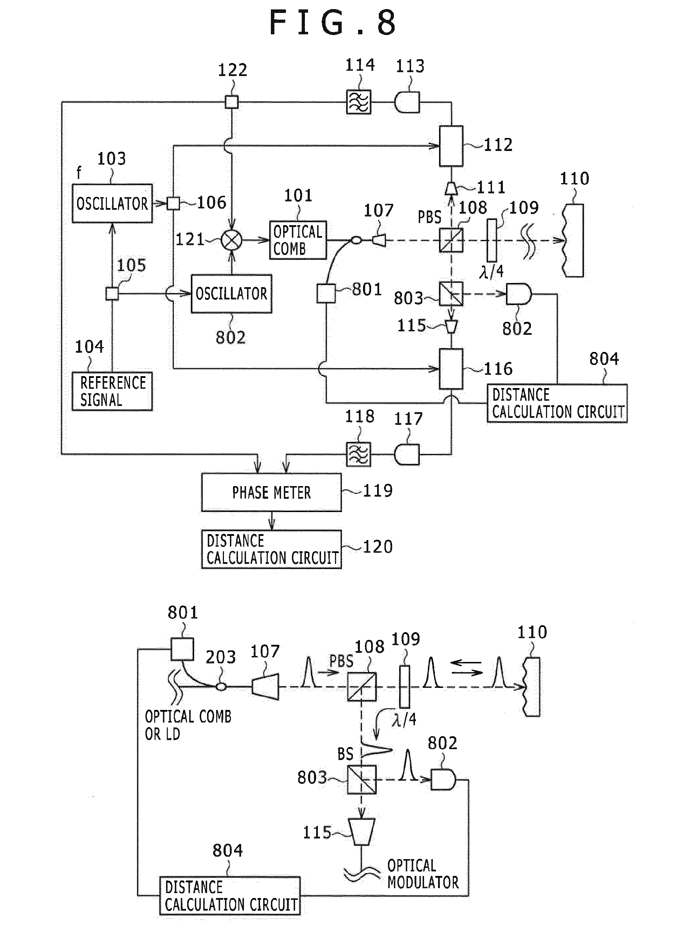

A seventh embodiment according to the present invention will be described with reference to FIG. 8.

In this embedment, an example of a device that measures a long distance with a high precision in combination of a time-of-flight technique with the fifth embodiment or the sixth embodiment will be described. The time-of-flight technique is a method of measuring a distance to the object on the basis of a time required for applying an irradiated pulse light to the object, and detecting a reflected light by the photodetector. A distance measurement range is not limited (depending on the detected light intensity), and the distance measurement precision is about several mm. In the fifth or sixth embedment, when the long distance is measured, because a large number of measures for the distance measurement need be prepared, the configuration becomes large-scaled. Under the circumstances, in combination with the time-of-flight technique, the long distance can be measured with a precision of about several mm through the time-of-flight technique, and several mm can be measured with a precision of several tens µm according to the fifth embodiment or the sixth embodiment. FIG. 8 exemplifies a configuration diagram of the distance measuring device according to this embodiment. A light from a time-of-flight light source 801 is guided to the same optical path as that of the optical comb or the LD by the aid of the coupler 203. The light is applied to space by the fiber collimator 107, input to the polarization beam splitter 108, passes through the λ/4 plate 109, and is applied to the object 110. The reflected light from the object again passes through the λ/4 plate 109, is reflected by the polarization beam splitter 108, and input to a time-of-flight photodetector 802 by a beam splitter 803. A time of a pulse applied from the time-of-flight light source 801, and a time of a pulse received by the time-of-flight technique photodetector 802 are input to a distance calculation circuit 804. The distance is calculated according to a time difference between the irradiation pulse and the received pulse on the basis of d=cΔt/2. In this expression, d is a measurement distance, c is a light speed, and Δt is a propagation time (reciprocation).

In this embodiment, as in the first embodiment, a phase comparison between the optically beaten-down signal and the oscillator 102 is conducted (for example, the phase comparison can be performed by the mixer 121), and an error signal is input to the repetitive frequency control mechanism of the optical comb 101, whereby the repetitive frequency of the optical comb is controlled so that the frequency of the optical beat down signal is held constant. With the above configuration, the fluctuation of the frequency of the optically beaten-down signal can be prevented, and the degradation of the phase measurement precision can be suppressed.

According to this embodiment, in the case where the long distance is measured with a high precision, because there is no need to provide a plurality of measures, the configuration scale of the device can be reduced.

### Eighth Embodiment

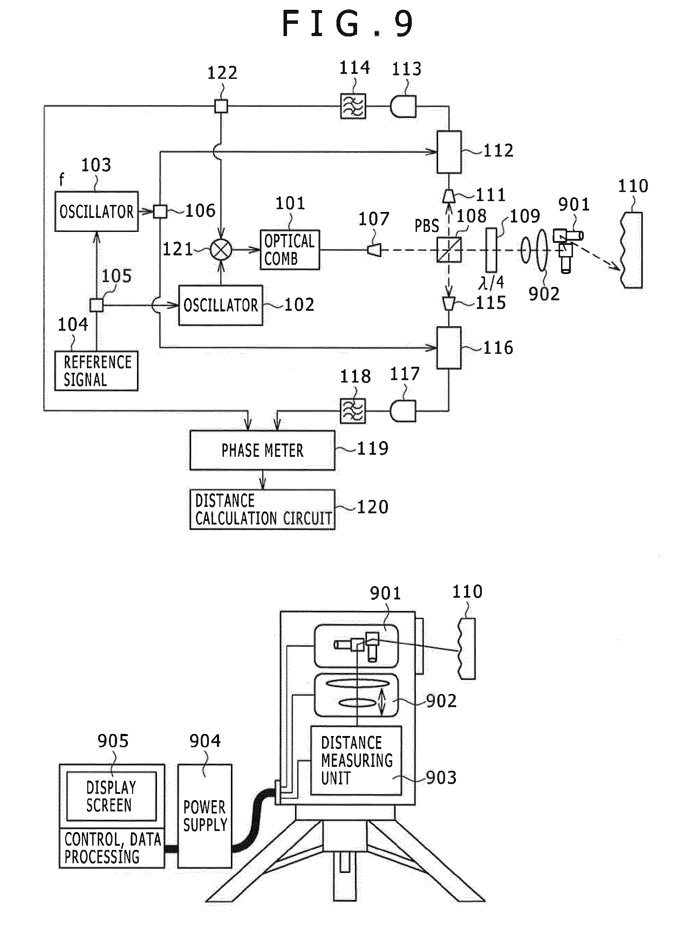

An eighth embodiment of the present invention will be described with reference to FIG. 9.

In this example, an example of a three-dimensional distance measuring device incorporating the distance measurement optical system mechanism described in the first to seventh embodiments will be described. FIG. 9 exemplifies an example of the device configuration diagram according to this embodiment. A light applied from a distance measurement unit 903 is focused on the object 110 by a focus lens 902. This is because if the object has a coarse surface, the light returned to the distance measurement unit becomes weak due to scattering, and therefore a light amount sufficient for detection is obtained by focusing. Also, beam scanning is three-dimensionally enabled by a galvano scanner 901, and a three-dimensional configuration can be measured. A power supply unit 904 is provided for driving the galvano scanner, the focus lens, and the distance measurement unit, and a GUI unit 905 is provided for displaying the control of the device and the distance measurement results.

According to this embodiment, a sufficient intensity can be obtained by focusing even for the coarse surface. Also, the three-dimensional configuration can be measured by the galvano scanner.

### Ninth Embodiment

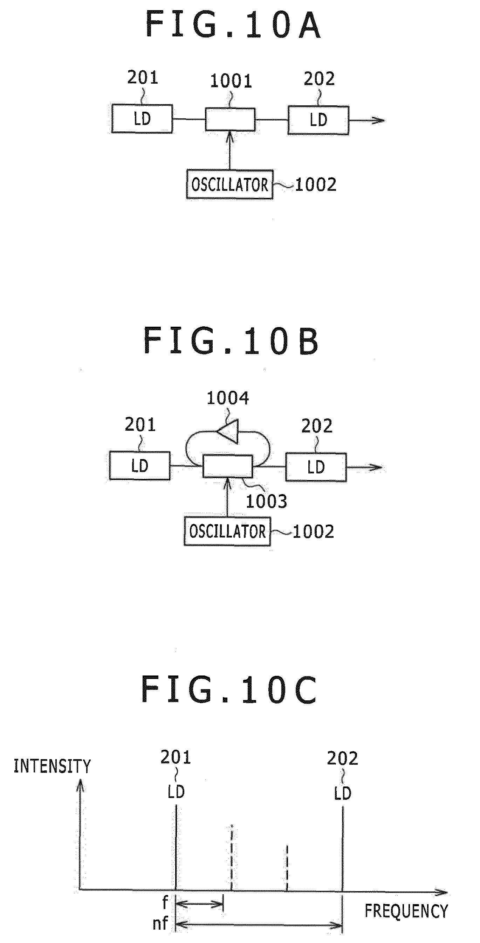

A ninth embodiment according to the present invention will be described with reference to FIGS. 10A, 10B, and 10C.

In this embodiment, an example of another embodiment for holding the difference frequency between the two LDs constant described in the second embodiment will be described. FIGS. 10A, 10B, and 10C exemplify a device configuration diagram of this embodiment. FIG. 10A illustrates an embodiment using an optical waveguide intensity modulator 1001. When a light emitted from the LD 201 is input to the optical waveguide intensity modulator 1001, a modulation frequency nf (n^{th}-order sideband) which is n-times as high as the oscillating frequency f of an oscillator 1002 is generated. A certain frequency component of the sideband is extracted by an optical filter, and input to the LD 202 as a result of which a sideband component input from the LD 202 is amplified and output (refer to FIG. 10C). This is a method called "injection lock", and the frequency difference between the LDs can be held constant with the stability of the oscillator. FIG. 10B illustrates an embodiment using the electric field absorption intensity modulator. The light emitted from the LD 201 is input to the electric field absorption intensity modulator. A component that has passed through the electric field absorption intensity modulator by the fiber loop n-times generates the modulation frequency nf (n^{th}-order sideband) which is n-times as high as the frequency f. A certain frequency component of the sideband is extracted by an optical filter, and input to the LD 202 as a result of which a sideband component input from the LD 202 is amplified and output.

According to this embodiment, not the frequency difference between the LDs is controlled as an error signal, but the frequency difference between the LDs can be held constant with the stability of the oscillator, thereby being capable of obtaining excellent stability.

The embodiments described above merely show specific examples for implementing the present invention, and the technical scope of the present invention is not definitely interpreted by those embodiments. That is, the present invention can be implemented in various modes without departing from the technical concept or the major features of the present invention. Also, the present invention may be implemented by combination of the first to ninth embodiments.

## Claims

1. A distance measuring device comprising:
a light source that oscillates a light having a plurality of different frequencies;
an optical modulator that modulates the frequencies of the light from the light source;
an oscillator that is driven by a reference signal generator, and inputs an electric signal to the optical modulator;
a photodetector that converts an optical signal modulated by the optical modulator into the electric signal; and
a distance calculation circuit that calculates a distance according to an electric signal output from the photodetector.

2. The distance measuring device according to claim 1, wherein the light source comprises an optical comb having a plurality of frequencies arranged at given intervals.

3. The distance measuring device according to claim 1, wherein the light source comprises a plurality of LDs that each oscillates a light different in frequency.

4. The distance measuring device according to claim 1, further comprising:
another oscillator that is different from the oscillator, and driven by the reference signal generator;
a mixer that compares a phase of the electric signal modulated by the optical modulator and converted by the photodetector with a phase from an electric signal from the another oscillator; and
a frequency control mechanism that receives a signal from the mixer, and controls a frequency of the light source.

5. The distance measuring device according to claim 1, wherein the optical modulator comprises an optical waveguide intensity modulator that subjects the frequency input from the oscillator to optical modulation of n-times frequency.

6. The distance measuring device according to claim 1, wherein the optical modulator comprises an electric field absorption intensity modulator that allows the input light to pass therethrough by a plurality of times to subject the frequency input from the oscillator to optical modulation of n-times frequency.

7. The distance measuring device according to claim 1, further comprising:
a plurality of bandpass filters that extracts a given frequency component from frequency components included in the signal detected by the detector.

8. The distance measuring device according to claim 1, further comprising:
a focus lens that focuses the light on the object to be measured;
a galvano scanner that can scan the object to be measured; and
a GUI screen that displays a device control and measurement results.

9. The distance measuring device according to claim 3, further comprising:
another modulator that is arranged among the plurality of LDs; and
a transmitter that inputs a voltage signal to the another modulator.

10. A distance measuring method comprising:
oscillating a light having a plurality of different frequency lights from a light source to apply the light to an object to be measured;
modulating frequencies of the light from the light source, and a light reflected from the object to be measured by a modulator driven by an oscillator;
converting the modulated optical signal into an electric signal; and
calculating a distance according to phases of an electric signal converted from the light reflected from the object to be measured, and an electric signal converted from the oscillated light.

11. The distance measuring method according to claim 10,
wherein the light source comprises an optical comb having a plurality of frequencies arranged at given intervals.

12. The distance measuring method according to claim 10,
wherein the light source comprises a plurality of LDs that each oscillates a light different in frequency.

13. The distance measuring method according to claim 10,
wherein a frequency when an optical signal modulated by the modulator is converted into an electric signal, and an electric signal from another oscillator different from the oscillator are synchronized in phase with each other to control an oscillating frequency of the light source.

14. The distance measuring method according to claim 10, further comprising:
subjecting optical modulation of a frequency n-times as high as the frequencies of the light reflected from the object to be measured and the oscillated light.

15. The distance measuring method according to claim 10,
wherein the frequencies of the light reflected from the object to be measured and the oscillated light are modulated by allowing the lights to pass through an electric field absorption intensity modulator by a plurality of times.

16. The distance measuring method according to claim 10, further comprising:
extracting given plural frequency components from frequency components included in the detected signal.

17. The distance measuring method according to claim 12, further comprising:
subjecting a light oscillated from one LD among the plurality of LDs to optical modulation, and then inputting the light to the other LD to control a frequency difference between the LDs.
